Europäisches Patentamt

**European Patent Office**

Office européen des brevets

(11) Numéro de publication: **0 395 134 B1**

(12) **FASCICULE DE BREVET EUROPEEN**

(45) Date de publication de fascicule du brevet: **05.07.95** (51) Int. Cl.6: **C01D 7/38**, C01D 7/16

(21) Numéro de dépôt: **90200884.6**

(22) Date de dépôt: **11.04.90**

(54) **Bicarbonate de sodium et procédé pour la cristallisation de bicarbonate de sodium.**

(30) Priorité: **24.04.89 FR 8905513**

(43) Date de publication de la demande:
**31.10.90 Bulletin 90/44**

(45) Mention de la délivrance du brevet:
**05.07.95 Bulletin 95/27**

(84) Etats contractants désignés:
**AT BE CH DE DK ES FR GB GR IT LI LU NL SE**

(56) Documents cités:
**BE-A- 559 735**
**US-A- 3 855 398**

(73) Titulaire: **SOLVAY (Société Anonyme)**
**Rue du Prince Albert, 33**
**B-1050 Bruxelles (BE)**

(72) Inventeur: **Breton, Claude**
**Rue Pierre Breton, 5**
**F-54110 Dombasle-sur-Meurthe (FR)**
Inventeur: **Ninane, Léon**
**Rue Laennec, 1**
**F-54110 Dombasle-sur-Meurthe (FR)**

(74) Mandataire: **Anthoine, Paul et al**
**SOLVAY**
**Département de la Propriété Industrielle**
**310, rue de Ransbeek**
**B-1120 Bruxelles (BE)**

## Description

L'invention concerne du bicarbonate de sodium de morphologie particulière, ainsi qu'un procédé pour son obtention.

Il existe divers procédés connus pour l'obtention de bicarbonate de sodium.

Un premier procédé, généralement dénommé procédé à l'ammoniaque et communément exploité dans l'industrie, consiste à traiter une saumure ammoniacale avec un gaz contenant de l'anhydride carbonique (TE-PANG HOU - "Manufacture of soda" - 2nd edition - American Chemical Society Monograph Series - 1969 - Hafner Publishing Company - pages 132 à 157).

Un autre procédé consiste à mélanger une solution aqueuse saturée de chlorure de sodium avec une base organique azotée insoluble dans l'eau (généralement une amine) et à traiter le mélange résultant avec un gaz contenant de l'anhydride carbonique (brevets FR-A-2545079 et FR-A-2551428 - SOLVAY & Cie).

Pour produire du bicarbonate de sodium de grande pureté destiné notamment à l'alimentation, on soumet une solution aqueuse de carbonate de sodium à l'action d'un gaz contenant de l'anhydride carbonique (SHREVE - "The Chemical Process Industries" - 2nd edition - 1969 - McGraw - Hill Book Company, Inc. - page 295).

Dans ces procédés connus, le traitement avec le gaz contenant de l'anhydride carbonique produit une suspension aqueuse de cristaux de bicarbonate de sodium. Ces procédés impliquent dès lors une filtration de la suspension pour en extraire les cristaux de bicarbonate de sodium et un séchage de ces cristaux. Ces deux opérations sont longues et coûteuses et elles impliquent par ailleurs des investissements onéreux. Le bicarbonate de sodium obtenu à l'issue du séchage est généralement à l'état d'une poudre fine, dont les particules sont irrégulières en forme et dimensions et présentent souvent une dispersion granulométrique étendue.

L'invention concerne du bicarbonate de sodium de morphologie nouvelle, qui se différencie du bicarbonate de sodium connu en ce qu'il est formé de particules régulières, de dimensions supérieures.

L'invention concerne dès lors du bicarbonate de sodium qui est à l'état de particules monolithiques cristallines, de forme ovoïde.

Dans le cadre de l'invention, les particules ovoïdes sont des particules qui présentent une surface essentiellement courbe, exempte d'arêtes vives. Elles ont généralement un profil de révolution qui peut varier de la lentille à la sphère idéale.

Selon une forme de réalisation particulière, le bicarbonate de sodium selon l'invention est à l'état de particules ovoïdes présentant un rapport axial moyen au moins égal à 0,5 et de préférence supérieur à 0,7, le rapport axial moyen étant défini par la relation :

$$\frac{\sum\limits_{i=1}^{i=n} a_i : b_i}{n}$$

où $a_i$ et $b_i$ désignent respectivement la plus petite et la plus grande dimension axiale d'une particule,
n désigne le nombre de particules d'un échantillon représentatif de particules de bicarbonate de sodium.

Selon une autre forme de réalisation, qui est spécialement avantageuse, le bicarbonate de sodium selon l'invention est à l'état de particules dont le diamètre moyen est au moins égal à 0,25 mm, et de préférence supérieur à 0,50 mm, le diamètre moyen étant défini par la relation :

$$\frac{\sum n_i d_i}{\sum n_i}$$

où $n_i$ désigne la fréquence pondérale des particules d'un échantillon de particules, dont le diamètre moyen égale $d_i$ (G. HERDAN - "Small particle statistics" - 2nd edition - 1960 - Butterworths - pages 10 et 11).

Le diamètre moyen optimum des particules formant le bicarbonate de sodium selon l'invention dépend de l'usage auquel on le destine. Du bicarbonate de sodium conforme à l'invention, qui convient bien dans la majorité des applications, présente un diamètre moyen de particules compris entre 0,50 et 3 mm et un rapport axial moyen compris entre 0,75 et 0,95. Les particules approximativement sphériques sont préférées.

Selon l'invention, les particules ovoïdes sont monolithiques. On entend désigner par particule monolithique, une particule formée d'un bloc unitaire, non aggloméré, de bicarbonate de sodium. Selon l'invention, les particules monolithiques sont cristallines. Chaque particule est de préférence un polycristal.

Le bicarbonate de sodium selon l'invention présente généralement une dureté élevée et une haute résistance aux chocs et à l'abrasion. Sa manipulation et son stockage sont aisés et les risques d'émanation de poussières sont réduits, voire supprimés. Il présente par ailleurs la particularité d'avoir une vitesse de dissolution modérée dans l'eau.

Le bicarbonate de sodium selon l'invention trouve diverses applications, notamment en pharmacie, pour l'alimentation humaine ou animale, pour le traitement des eaux usées ou des eaux acides, ainsi que pour la production de carbonate de sodium.

L'invention concerne également un procédé pour la fabrication de bicarbonate de sodium, selon lequel on fait circuler une solution aqueuse sursaturée de bicarbonate de sodium à travers un lit mobile de cristaux.

Dans le procédé selon l'invention, les cristaux du lit servent de germes pour la cristallisation de bicarbonate de sodium par désursaturation de la solution sursaturée. Bien que l'on puisse mettre en oeuvre des cristaux en une matière minérale différente du bicarbonate de sodium, on préfère, selon l'invention, utiliser un lit de cristaux de bicarbonate de sodium. Ceux-ci peuvent être obtenus par toute technique adéquate connue, par exemple l'une des techniques de l'art antérieur décrites plus haut.

Conformément à une forme d'exécution préférée du procédé selon l'invention, on broye une partie du bicarbonate de sodium cristallisé au cours du procédé et on recycle le bicarbonate de sodium broyé dans le lit mobile. On a en effet observé que la qualité du bicarbonate de sodium produit par le procédé selon l'invention est améliorée (en particulier, la morphologie des grains est plus régulière), lorsque les germes servant à ensemencer la cristallisation du bicarbonate de sodium dans le lit comprennent des particules obtenues en broyant des grains de bicarbonate de sodium produits au moyen du procédé selon l'invention.

Le lit mobile est par définition un lit dans lequel les particules sont animées de mouvements incessants pendant le passage de la solution de bicarbonate de sodium. Il peut être mis en oeuvre dans tout cristalliseur approprié.

Selon une forme d'exécution préférée du procédé suivant l'invention, le lit mobile est un lit fluidisé conformément à la définition généralement admise (GIVAUDON, MASSOT et BENSIMON - "Précis de génie chimique" - Tome 1 - 1960 - Berger-Levrault, Nancy - pages 353 à 370). A cet effet, on utilise avantageusement la technique décrite et revendiquée dans la demande de brevet français 88.10402 (SOLVAY & Cie), qui consiste à faire passer la solution sursaturée à travers un distributeur disposé sous le lit et conçu pour distribuer la solution sursaturée en filets verticaux, le distributeur étant maintenu à une température appropriée pour éviter que du bicarbonate de sodium cristallise spontanément à sa surface. Un appareil convenant pour la mise en oeuvre de cette forme d'exécution du procédé selon l'invention comprend une cuve cylindrique verticale et un tube vertical qui est disposé axialement dans la cuve et débouche au voisinage immédiat du fond de celle-ci; la chambre annulaire verticale qui est ainsi délimitée entre le tube axial et la paroi cylindrique de la cuve est divisée en deux par le distributeur du lit fluidisé. Dans l'exploitation de cet appareil, le lit de cristaux est mis en oeuvre dans la chambre annulaire, au-dessus du distributeur, et la solution sursaturée est introduite dans le tube axial, de manière qu'elle pénètre radialement dans la chambre annulaire, près du fond de celle-ci, traverse le distributeur et fluidise le lit de cristaux.

Le taux optimum de sursaturation de la solution sursaturée dépend de divers paramètres, notamment de sa température et de la présence éventuelle d'impuretés solides ou dissoutes. En pratique, toutes autres choses égales, on a intérêt à réaliser un taux de sursaturation maximum, celui-ci devant toutefois être limité pour éviter des cristallisations accidentelles sur les parois de l'installation de cristallisation, en amont du lit de cristaux, ou une croissance anarchique des cristaux du lit, préjudiciable à leur morphologie et à leur résistance mécanique.

La température de la solution sursaturée n'est pas critique. On a toutefois observé, en pratique, que la vitesse de croissance des cristaux du lit est d'autant plus grande que la température de la solution est élevée. Il convient toutefois que la température de la solution reste inférieure à sa température d'ébullition à la pression régnant dans l'installation de cristallisation. Par exemple, on peut avantageusement mettre en oeuvre des solutions aqueuses de bicarbonate de sodium présentant un degré de sursaturation compris entre 0,5 et 15 g/kg, à une température comprise entre 50 et 115°C, lorsqu'il règne dans l'installation de cristallisation, la pression atmosphérique normale. Le degré de sursaturation exprime la masse de bicarbonate de sodium, par kg de solution, qui excède la masse correspondant à la saturation de la solution.

Le moyen utilisé pour obtenir la solution aqueuse sursaturée de bicarbonate de sodium n'est pas critique.

Selon une forme de réalisation préférée de l'invention, pour obtenir la solution sursaturée, on mélange d'abord une solution aqueuse de bicarbonate de sodium (de préférence saturée) avec une solution aqueuse d'un sel de sodium plus soluble dans l'eau que le bicarbonate de sodium, et on convertit ledit sel en bicarbonate de sodium dans le mélange résultant. Dans cette forme d'exécution du procédé selon l'invention, les conditions opératoires doivent être réglées pour éviter de précipiter du bicarbonate pendant la conversion dudit sel de sodium en bicarbonate de sodium. Ces conditions sont aisément réalisées par une sélection appropriée du sel de sodium, des quantités pondérales relatives des solutions aqueuses que l'on mélange ou de leurs concentrations respectives. Le sel de sodium peut avantageusement être du chlorure ou du carbonate de sodium.

Dans une première variante de la forme de réalisation qui vient d'être décrite de l'invention, pour produire la solution aqueuse sursaturée de bicarbonate de sodium, on mélange une solution aqueuse saturée de bicarbonate de sodium avec une saumure ammoniacale et on traite le mélange résultant avec un gaz contenant de l'anhydride carbonique, en réglant les quantités respectives des solutions et du gaz pour éviter de précipiter du bicarbonate de sodium.

Dans une deuxième variante de ladite forme de réalisation, on mélange une solution aqueuse saturée de bicarbonate de sodium avec une solution aqueuse de carbonate de sodium et on traite le mélange résultant avec un gaz contenant de l'anhydride carbonique dans des conditions réglées pour éviter de précipiter du bicarbonate de sodium.

Dans une troisième variante, on mélange une solution aqueuse saturée de bicarbonate de sodium, une solution aqueuse de chlorure de sodium et un liquide organique insoluble dans l'eau comprenant une base organique azotée, insoluble dans l'eau, on traite le mélange résultant avec un gaz contenant de l'anhydride carbonique en réglant les concentrations ou les quantités respectives de la solution aqueuse, du liquide organique et du gaz pour obtenir, dans le milieu réactionnel résultant, une solution aqueuse sursaturée de bicarbonate de sodium, sans précipité, et on soumet ledit milieu réactionnel à une décantation pour recueillir séparément la solution aqueuse sursaturée de bicarbonate de sodium et une phase organique comprenant du chlorhydrate de la base organique azotée.

Dans cette variante du procédé selon l'invention, la base organique azotée est, par définition, tout réactif organique azoté qui est insoluble dans l'eau et qui présente un caractère basique suffisant pour réagir avec le chlorure d'hydrogène en formant du chlorhydrate de la base. Des exemples de bases organiques azotées utilisables dans cette variante de l'invention sont les imines insolubles dans l'eau et leurs dérivés, les sels d'ammonium quaternaire insolubles dans l'eau et les amines et dérivés aminés insolubles dans l'eau. On peut utiliser indifféremment des amines primaires, secondaires ou tertiaires. On utilise de manière spécialement avantageuse des amines primaires et, tout particulièrement, des alkylamines primaires comprenant de 12 à 24 atomes de carbone, de préférence de 12 à 14 atomes de carbone, dans la molécule.

Le liquide organique peut être constitué par la base organique azotée telle quelle, lorsque celle-ci est liquide dans les conditions d'exécution du procédé. En variante, il peut être une solution de la base organique azotée dans un solvant organique insoluble dans l'eau. Des exemples de solvants organiques utilisables dans le cadre de l'invention sont le xylène, les butylbenzènes, les méthyléthylbenzènes et plus spécialement le white spirit et les solvants du commerce connus sous les marques ISOPAR (Esso) qui est un mélange d'isoparaffines, SOLVESSO (Esso) qui est un mélange de composés aromatiques, SHELLSOL AB (Shell) qui est un mélange de composés aromatiques et SHELLSOL K qui est un mélange de composés aliphatiques.

On entend par l'expression "insoluble dans l'eau" que la solubilité de la base organique azotée et, le cas échéant, du solvant dans l'eau n'excède pas 2,5 % en poids de solution, de préférence 1 %.

Le liquide organique peut éventuellement contenir du chlorhydrate de la base organique azotée. D'une manière générale, il convient toutefois que le rapport entre le poids de chlorhydrate de la base organique azotée dans le liquide organique et le poids total du mélange de base organique azotée et de chlorhydrate n'excède pas 0,25, les rapports inférieurs à 0,20 étant conseillés et ceux inférieurs à 0,15 étant préférés. Dans la suite, ce rapport est appelé "taux de chlorhydrate du liquide organique".

Des particularités et détails de l'invention vont ressortir de la description suivante des dessins annexés.

La figure 1 montre le schéma général d'une installation mettant en oeuvre une première forme d'exécution particulière du procédé selon l'invention;

La figure 2 montre le schéma général d'une installation mettant en oeuvre une seconde forme d'exécution du procédé selon l'invention;

La figure 3 montre, en section axiale verticale, un appareil de cristallisation à lit fluidisé, utilisable dans les installations des figures 1 et 2;

Les figures 4 et 5 sont des photographies, au grossissement 40 x, de grains de bicarbonate de sodium obtenus au moyen du procédé selon l'invention.

Dans ces figures, des mêmes notations de référence désignent des éléments identiques.

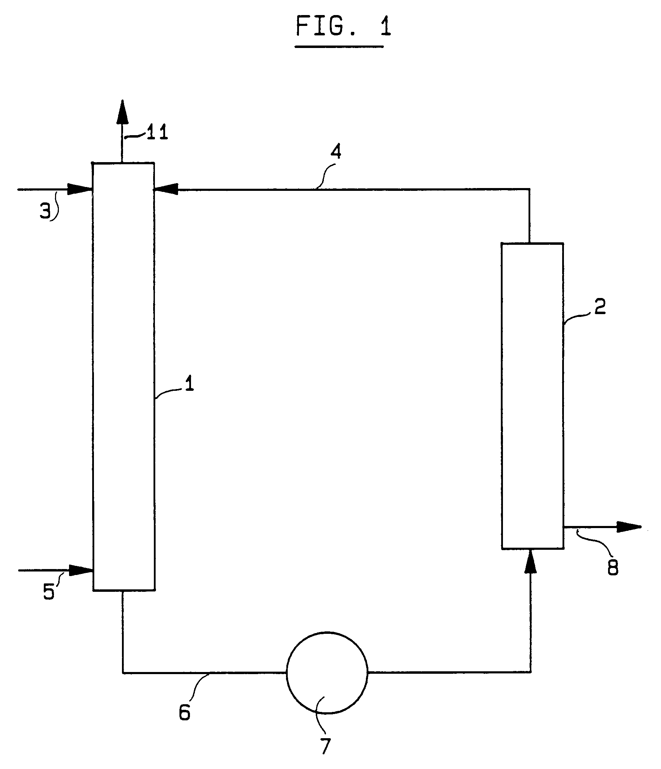

L'installation schématisée à la figure 1 comprend une chambre de réaction 1 et une chambre de cristallisation 2.

La chambre de réaction 1 est alimentée de manière continue et simultanément avec une solution aqueuse saturée en carbonate de sodium 3, une solution aqueuse saturée (ou légèrement sursaturée) en bicarbonate de sodium 4 et un gaz 5 contenant de l'anhydride carbonique. Le gaz 5 est par exemple du gaz recueilli d'un four à chaux, contenant au moins 60 % en poids d'anhydride carbonique.

Le débit du gaz 5 est réglé à une valeur suffisante pour que la totalité du carbonate de sodium introduit par la solution 3 dans la chambre 1 y soit convertie en bicarbonate de sodium. Les débits respectifs des solutions 3 et 4 et du gaz sont par ailleurs réglés pour produire dans la chambre 1, une solution aqueuse sursaturée en bicarbonate de sodium, en évitant expressément de précipiter du bicarbonate de sodium.

Le mélange réactionnel 6 soutiré de la chambre de réaction 1 est dès lors une solution aqueuse sursaturée en bicarbonate de sodium. Elle est transférée telle quelle, via une pompe 7, dans la chambre de cristallisation 2. On soutire par ailleurs de la chambre 1 l'excès de gaz 11 qui n'a pas réagi.

Dans la chambre de cristallisation 2, la solution sursaturée 6 traverse verticalement, de bas en haut, un lit de cristaux de bicarbonate de sodium dont le diamètre moyen des particules est échelonné entre 0,25 et 1 mm environ. Les dimensions du lit de cristaux et la vitesse ascensionnelle de la solution sursaturée 6 sont réglées de manière à fluidiser la totalité du lit, tout en évitant que les particules les plus fines soient entraînées par la solution hors du lit. La solution 6 est dès lors progressivement désursaturée pendant qu'elle traverse le lit dont les cristaux croissent en conséquence. Les grosses fractions granulométriques occupant le bas de la chambre de cristallisation sont soutirées périodiquement ou de manière continue par un conduit de soutirage 8. La hauteur du lit de cristaux est réglée de manière que l'eau mère de la cristallisation, recueillie à la partie supérieure de la chambre 2 soit une solution aqueuse saturée ou légèrement sursaturée en bicarbonate de sodium. Elle est envoyée dans la chambre de réaction 1, où elle constitue la solution 4 précitée.

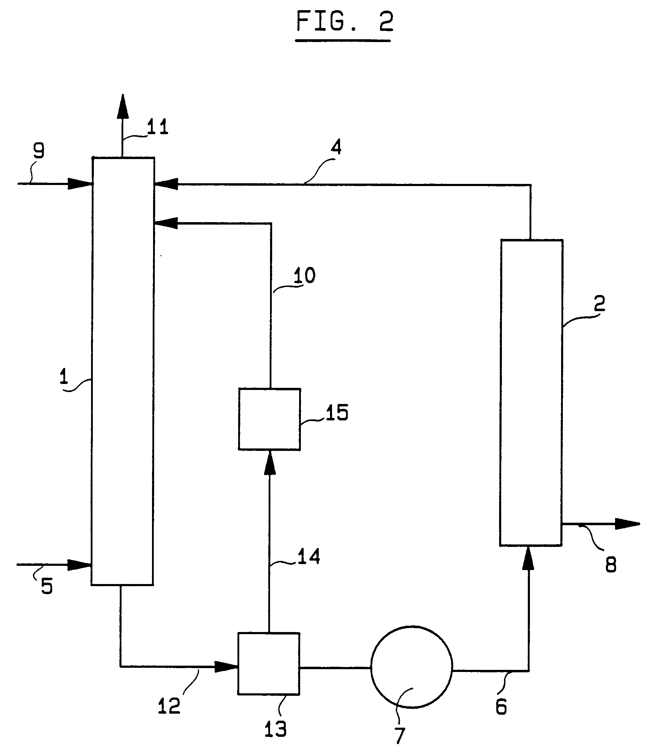

Dans l'installation représentée à la figure 2, la chambre de réaction 1 est alimentée simultanément avec une solution aqueuse saturée de chlorure de sodium 9, une solution aqueuse saturée (ou légèrement sursaturée) en bicarbonate de sodium 4, un gaz 5 contenant de l'anhydride carbonique et un liquide organique 10 comprenant une amine primaire insoluble dans les solutions aqueuses de bicarbonate de sodium. Le liquide organique 10 peut par exemple être une solution à 50 % en poids dans du xylène, de l'alkylamine primaire connue sous la marque PRIMENE JMT (Rohm & Haas) qui comprend entre 18 et 24 atomes de carbone dans sa molécule. En variante, le liquide organique peut être une alkylamine primaire liquide contenant moins de 18 atomes de carbone dans sa molécule, utilisée telle quelle, non dissoute dans un solvant, par exemple l'amine connue sous la marque PRIMENE 81R (Rohm & Haas) dont la molécule contient entre 12 et 14 atomes de carbone.

Les débits respectifs de la solution aqueuse 9, du liquide organique 10 et du gaz 5 sont réglés pour convertir une partie au moins du chlorure de sodium de la solution 9 en bicarbonate de sodium. Les débits respectifs des solutions aqueuses 4 et 9, du liquide organique 10 et du gaz 5 sont par ailleurs réglés pour obtenir dans la chambre 1 une solution aqueuse sursaturée en bicarbonate de sodium, en évitant expressément de précipiter le bicarbonate de sodium.

Le mélange réactionnel 12 soutiré de la chambre de réaction 1 est dès lors constitué d'une solution aqueuse sursaturée de bicarbonate de sodium et d'une phase organique comprenant du chlorhydrate d'amine. Le mélange réactionnel 12 est transféré dans une chambre de décantation 13, où on sépare, par gravité ou centrifugation, la phase organique de chlorhydrate d'amine 14 et la solution aqueuse sursaturée de bicarbonate de sodium 6.

La phase organique 14 est traitée de manière connue en soi dans un dispositif 15 pour régénérer l'amine 10 qui est recyclée dans la chambre de réaction 1.

La solution aqueuse sursaturée de bicarbonate de sodium 6 est envoyée, via la pompe 7, dans la chambre de cristallisation 2 où elle est traitée de la manière décrite plus haut, en référence à la figure 1.

Dans les installations schématisées aux figures 1 et 2, la chambre de réaction 1 peut avantageusement être une colonne d'absorption du type à empilage, bien connue en technique (JOHN, H. PERRY - "Chemical Engineers' Handbook" - 4th edition - 1963 - McGraw - Hill book company - pages 18.27 à 18.53).

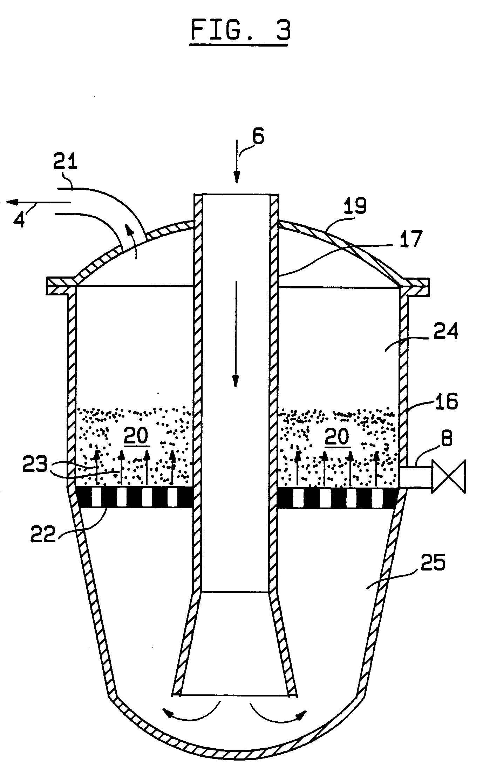

La chambre de cristallisation 2 doit être conçue pour permettre la mise en oeuvre d'un lit mobile stable de cristaux. A cet effet, on peut avantageusement utiliser l'appareil de cristallisation représenté à la figure 3. Celui-ci est conforme à l'appareil décrit dans la demande de brevet français 88.10402 (SOLVAY & Cie). Il comprend une cuve cylindrique verticale 16 dans laquelle un tube vertical 17 est disposé axialement. La cuve 16 est obturée par un couvercle 19 et celui-ci est traversé par le tube vertical 17 qui débouche par ailleurs au voisinage du fond de la cuve 16. Une cloison annulaire, horizontale, ajourée 22 divise la cuve en une chambre annulaire supérieure 24 et une chambre inférieure 25. La chambre supérieure 24 constitue la chambre de cristallisation et contient le lit de cristaux 20. Le tube vertical 17 sert à l'admission de la solution sursaturée de bicarbonate de sodium 6 dans la chambre 25; un conduit 21 débouchant dans la partie supérieure de la chambre 24 sert à évacuer l'eau mère 4 de la cristallisation et un conduit 8 sert au soutirage des cristaux.

Pendant le fonctionnement de l'appareil de la figure 3, la solution aqueuse sursaturée de bicarbonate de sodium 6 descend verticalement dans le tube 17, pénètre radialement dans la chambre inférieure 25 de la cuve 16 et traverse successivement la cloison 22 et le lit de cristaux 20. La cloison 22 a pour fonction de distribuer la solution sursaturée 6 en filets verticaux 23, pour fluidiser le lit de cristaux 20. Les cristaux du lit vont dès lors se répartir en couches ou strates en fonction de leurs dimensions granulométriques. Les grosses fractions granulométriques progressent vers le bas du lit d'où elles sont évacuées périodiquement ou de manière continue par le conduit de soutirage 8. La solution désursaturée sortant du lit est évacuée par le conduit 21.

Les exemples suivants servent à illustrer l'invention.

Ces exemples ont trait à des essais de laboratoire qui ont été exécutés dans une installation associant une chambre de sursaturation pour la production d'une solution sursaturée de bicarbonate de sodium et une chambre de cristallisation de bicarbonate de sodium, fonctionnant sur le principe du lit mobile de cristaux. Pour la chambre de sursaturation, on a utilisé une colonne cylindrique munie de plusieurs plateaux perforés horizontaux, régulièrement espacés l'un de l'autre. La chambre de cristallisation a consisté en une colonne cylindrique prolongée à la base par une zone conique pour le soutirage des cristaux de bicarbonate de sodium.

Exemple 1

Dans cet exemple, on a alimenté la chambre de sursaturation avec :
- une solution aqueuse de carbonate de sodium contenant 250 g de carbonate de sodium par kg et du calcium en quantité égale à 180 mg par kg de bicarbonate de sodium cristallisé - débit = 10 l/heure;
- une solution aqueuse saturée en bicarbonate de sodium, constituée par l'eau mère de la cristallisation du bicarbonate de sodium -, débit = 450 l/heure;
- un gaz contenant 40 % en poids de dioxyde de carbone - débit = 2 m³/heure.

On a soutiré, à la base de la chambre de sursaturation, une solution aqueuse sursaturée en bicarbonate de sodium, que l'on a introduite à la base de la chambre de cristallisation. Simultanément, on a introduit dans celle-ci des particules de bicarbonate de sodium, à raison d'environ 70 g/heure, ces particules étant destinées à servir de germes pour l'ensemencement de la cristallisation du bicarbonate de sodium.

La température a été maintenue à 60°C dans les chambres de sursaturation et de cristallisation.

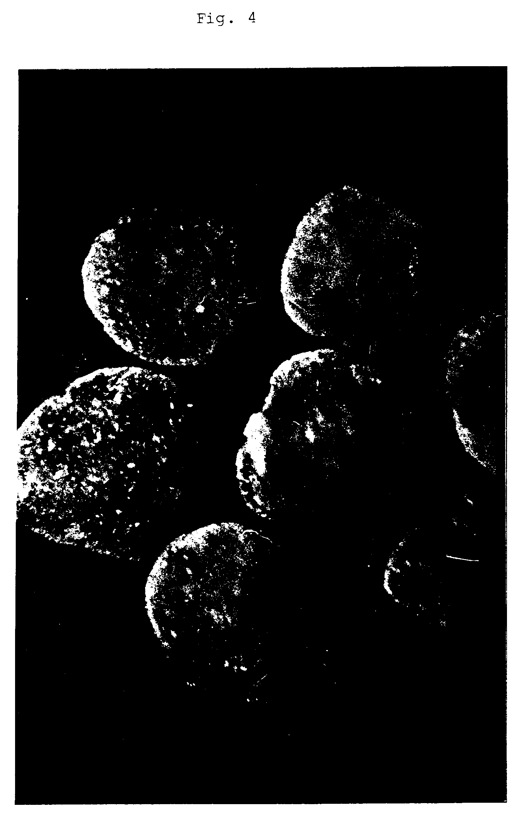

La figure 4 reproduit la photographie de grains de bicarbonate de sodium recueillis à la base de la chambre de cristallisation. Ces grains ont une forme variant de la sphère à l'ellipsoïde, sans aspérités ni arêtes vives; ils présentent un diamètre moyen de 920 μm.

Exemple 2

On a répété l'essai de l'exemple 1 dans les conditions suivantes :
- composition de la solution aqueuse de carbonate de sodium :
   . $Na_2CO_3$ = 250 g/kg de solution
   . Ca = 55 mg/kg de bicarbonate de sodium produit;
- débit de la solution de carbonate de sodium : 8 l/h;
- débit de la solution saturée de bicarbonate de sodium (eau mère) : 450 l/h;
- débit du gaz : 2,6 m³/h;
- ensemencement dans la chambre de cristallisation : particules de bicarbonate de sodium de 520 microns de diamètre moyen, obtenues par broyage de grains de bicarbonate de sodium soutirés à la base de la chambre de cristallisation;
- température de travail : 70°C.

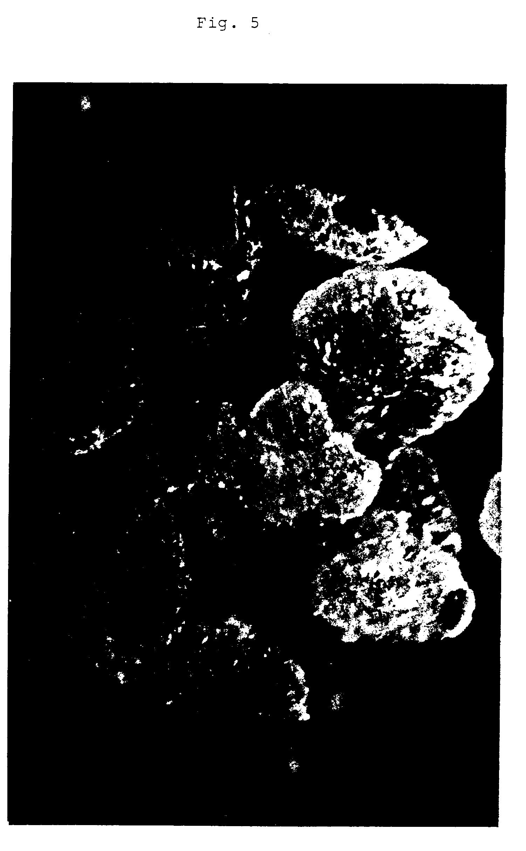

Le bicarbonate de sodium soutiré à la base de la chambre de cristallisation s'est présenté à l'état de grains réguliers, sans aspérités ni arêtes vives, de forme variant de la sphère à l'ellipsoïde, de diamètre moyen égal à 900 μm. La figure 5 reproduit la photographie de grains recueillis au cours de l'essai.

**Revendications**

1. Bicarbonate de sodium à l'état de particules, caractérisé en ce qu'il comprend des particules monolithiques cristallines, de forme ovoïde.

2. Bicarbonate de sodium selon la revendication 1, caractérisé en ce que les particules ovoïdes présentent un rapport axial moyen au moins égal à 0,5, défini par la relation :

$$\frac{\sum_{i=1}^{i=n} a_i : b_i}{n}$$

où $a_i$ et $b_i$ désignent respectivement la plus petite et la plus grande dimension axiale d'une particule, et n désigne le nombre de particules d'un échantillon de particules.

**3.** Bicarbonate de sodium selon la revendication 1 ou 2, caractérisé en ce que les particules ovoïdes présentent un diamètre moyen au moins égal à 0,25 mm.

**4.** Procédé pour la cristallisation de bicarbonate de sodium à partir d'une solution aqueuse de bicarbonate de sodium, caractérisé en ce qu'on met en oeuvre une solution aqueuse sursaturée de bicarbonate de sodium que l'on fait circuler à travers un lit mobile de cristaux.

**5.** Procédé selon la revendication 4, caractérisé en ce que le lit mobile est un lit fluidisé de cristaux.

**6.** Procédé selon la revendication 4 ou 5, caractérisé en ce que les cristaux du lit mobile sont des cristaux de bicarbonate de sodium.

**7.** Procédé selon la revendication 6, caractérisé en ce qu'on met en oeuvre, dans le lit mobile, des cristaux de bicarbonate de sodium obtenus en broyant une fraction du bicarbonate de sodium provenant de la cristallisation.

**8.** Procédé selon l'une quelconque des revendications 4 à 7, caractérisé en ce qu'on met en oeuvre une solution aqueuse sursaturée de bicarbonate de sodium obtenue en mélangeant une solution aqueuse saturée de bicarbonate de sodium avec une solution aqueuse d'un sel de sodium plus soluble que le bicarbonate de sodium et en convertissant ledit sel de sodium en bicarbonate de sodium dans le mélange résultant.

**9.** Procédé selon la revendication 8, caractérisé en ce que la solution aqueuse saturée de bicarbonate de sodium est l'eau mère de la cristallisation du bicarbonate de sodium recueillie du lit de cristaux.

**10.** Procédé selon la revendication 8 ou 9, caractérisé en ce que le sel de sodium est du carbonate de sodium que l'on convertit en bicarbonate de sodium en traitant le mélange précité avec un gaz contenant de l'anhydride carbonique.

**11.** Procédé selon la revendication 8 ou 9, caractérisé en ce qu'on mélange une solution aqueuse saturée de bicarbonate de sodium, une solution aqueuse de chlorure de sodium et une base organique azotée insoluble dans les solutions aqueuses de bicarbonate de sodium, on traite le mélange résultant avec un gaz contenant de l'anhydride carbonique et on sépare une phase organique contenant du chlorhydrate de la base organique azotée et une phase aqueuse comprenant la solution aqueuse sursaturée de bicarbonate de sodium.

**Claims**

**1.** Sodium bicarbonate in the form of particles, characterized in that it comprises ovoid crystalline monolithic particles.

**2.** Sodium bicarbonate according to Claim 1, characterized in that the ovoid particles have a mean axial ratio of at least 0.5, defined by the relationship:

$$\frac{\sum_{i=1}^{i=n} a_i : b_i}{n}$$

where $a_i$ and $b_i$ respectively denote the smallest and the largest axial dimension of a particle, and n denotes the number of particles in a sample of particles.

**3.** Sodium bicarbonate according to Claim 1 or 2, characterized in that the ovoid particles have a mean diameter of at least 0.25 mm.

**4.** Process for the crystallization of sodium bicarbonate starting from an aqueous solution of sodium bicarbonate, characterized in that an aqueous solution supersaturated in sodium bicarbonate is used which is circulated through a mobile bed of crystals.

**5.** Process according to Claim 4, characterized in that the mobile bed is a fluidized bed of crystals.

**6.** Process according to Claim 4 or 5, characterized in that the crystals of the mobile bed are crystals of sodium bicarbonate.

**7.** Process according to Claim 6, characterized in that crystals of sodium bicarbonate obtained by grinding a fraction of sodium bicarbonate originating from the crystallization are used in the mobile bed.

**8.** Process according to any one of Claims 4 to 7, characterized in that an aqueous solution Supersaturated in sodium bicarbonate is used which is obtained by mixing a saturated aqueous solution of sodium bicarbonate with an aqueous solution of a sodium salt more soluble than sodium bicarbonate and by converting the said sodium salt to sodium bicarbonate in the resulting mixture.

9. Process according to Claim 8, characterized in that the saturated aqueous solution of sodium bicarbonate is the mother liquor from the crystallization of sodium bicarbonate collected from the bed of crystals.

10. Process according to Claim 8 or 9, characterized in that the sodium salt is sodium carbonate which is converted to sodium bicarbonate by treating the abovementioned mixture with a gas containing carbon dioxide.

11. Process according to Claim 8 or 9, characterized in that a saturated aqueous solution of sodium bicarbonate, an aqueous solution of sodium chloride and a nitrogenous organic base insoluble in the aqueous solutions of sodium bicarbonate are mixed, the resulting mixture is treated with a gas containing carbon dioxide and an organic phase containing the hydrochloride of the nitrogenous organic base and an aqueous phase comprising the supersaturated aqueous solution of sodium bicarbonate are separated.

**Patentansprüche**

1. Natriumbicarbonat im Partikelzustand, dadurch gekennzeichnet, daß es monolithische Kristallteilchen von ovaler Form enthält.

2. Natriumbicarbonat gemäß Anspruch 1, dadurch gekennzeichnet, daß die ovalen Teilchen ein mittleres Achsenverhältnis von wenigstens 0,5 aufweisen, das durch die Beziehung:

$$\frac{\sum_{i=1}^{i=n} a_i : b_i}{n}$$

definiert ist, worin $a_i$ und $b_i$ die kleinste beziehungsweise größte Achsenabmessung eines Teilchens bezeichnen und n die Anzahl der Teilchen einer Teilchenprobe bezeichnet.

3. Natriumbicarbonat gemäß Anspruch 1 oder 2, dadurch gekennzeichnet, daß die ovalen Teilchen einen mittleren Durchmesser von wenigstens 0,25 mm aufweisen.

4. Verfahren zur Kristallisation von Natriumbicarbonat aus einer wäßrigen Natriumbicarbonatlösung, dadurch gekennzeichnet, daß eine übersättigte wäßrige Natriumbicarbonatlösung eingesetzt wird, die man durch ein Kristallfließbett strömen läßt.

5. Verfahren gemäß Anspruch 4, dadurch gekennzeichnet, daß das Fließbett ein Kristallfließbett ist.

6. Verfahren gemäß Anspruch 4 oder 5, dadurch gekennzeichnet, daß die Kristalle des Fließbetts Natriumbicarbonatkristalle sind.

7. Verfahren gemäß Anspruch 6, dadurch gekennzeichnet, daß in dem Fließbett Natriumbicarbonatkristalle eingesetzt werden, die durch Mahlen einer aus der Kristallisation stammenden Natriumbicarbonatfraktion erhalten werden.

8. Verfahren gemäß einem der Ansprüche 4 bis 7, dadurch gekennzeichnet, daß eine übersättigte wäßrige Natriumbicarbonatlösung eingesetzt wird, die durch Mischen einer gesättigten wäßrigen Natriumbicarbonatlösung mit einer wäßrigen Lösung eines Natriumsalzes, das besser löslich ist als Natriumbicarbonat, und durch Umwandlung des besagten Natriumsalzes in Natriumbicarbonat in der gebildeten Lösung erhalten wird.

9. Verfahren gemäß Anspruch 8, dadurch gekennzeichnet, daß die gesättigte wäßrige Natriumbicarbonatlösung die Mutterlauge der Kristallisation des aus dem Kristallbett gewonnenen Natriumbicarbonats ist.

10. Verfahren gemäß Anspruch 8 oder 9, dadurch gekennzeichnet, daß das Natriumsalz Natriumcarbonat ist, das durch Behandlung der oben erwähnten Mischung mit einem kohlendioxidhaltigen Gas in Natriumbicarbonat umgewandelt wird.

11. Verfahren gemäß Anspruch 8 oder 9, dadurch gekennzeichnet, daß eine gesättige wäßrige Natriumbicarbonatlösung, eine wäßrige Natriumchloridlösung und eine organische stickstoffhaltige Base, die in den wäßrigen Natriumbicarbonatlösungen unlöslich ist, gemischt werden, die gebildete Mischung mit einem kohlendioxidhaltigen Gas behandelt wird und eine organische Phase, die das Chlorhydrat der organischen stickstoffhaltigen Base enthält, und eine wäßrige Phase, die die übersättigte wäßrige Natriumbicarbonatlösung umfaßt, abgetrennt werden.

# FIG. 1

# FIG. 2

# FIG. 3

Fig. 4

Fig. 5